# EUROPÄISCHE PATENTSCHRIFT

(11) **EP 3 497 407 B1**
(45) Veröffentlichungstag und Bekanntmachung des Hinweises auf die Patenterteilung: **29.07.2020**
(21) Anmeldenummer: 17731124.8
(22) Anmeldetag: 14.06.2017
(51) Int. Cl.: G01D 5/14, B61L 15/00, B61G 9/20

(54) **ÜBERWACHEN EINER RELATIVBEWEGUNG ZWEIER ELEMENTE**
MONITORING RELATIVE MOTION OF TWO ELEMENTS
SURVEILLANCE DU DÉPLACEMENT RELATIF DE DEUX ÉLÉMENTS

(30) Priorität: 12.08.2016 DE 102016215066
(43) Veröffentlichungstag der Anmeldung: 19.06.2019
(73) Patentinhaber: Voith Patent GmbH, 89522 Heidenheim (DE)
(72) Erfinder: HOMANN, Matthias, 38104 Braunschweig (DE)
(74) Vertreter: Voith Patent GmbH - Patentabteilung
(86) Internationale Anmeldenummer: PCT/EP2017/064535
(87) Internationale Veröffentlichungsnummer: WO 2018/028860

(56) Entgegenhaltungen:
- EP-A2- 1 106 962
- DE-A1-102012 015 252
- US-A1- 2002 171 547
- US-A1- 2008 143 525

## Beschreibung

Die Erfindung betrifft das Überwachen einer Relativbewegung zweier Elemente. Insbesondere betrifft die Erfindung das Erfassen eines Auslösens einer Bewegungssicherung mit zwei Elementen, die gegeneinander beweglich gelagert sind.

US 2008/143525 A1 wird als nächster Stand der Technik angesehen. Es offenbart eine Vorrichtung zur Überwachung einer Relativbewegung zwischen zwei Elementen, die gegeneinander beweglich gelagert sind.

Zwei Elemente sind beweglich gegeneinander gelagert, wobei eine Relativbewegung zwischen den beiden Elementen nur unter einer vorbestimmten Bedingung auftreten soll. Beispielsweise können die beiden Elemente so miteinander verbunden sein, dass zwischen ihnen eine vorbestimmte Kraft übertragen werden kann, eine größere Kraft jedoch eine Relativbewegung der Elemente bewirkt. In einer Ausführungsform bilden die beiden Elemente eine Überlastkupplung und die Relativbewegung kann ein Abreißen, Abscheren oder Deformieren eines der Elemente umfassen. Das Eintreten einer vorbestimmten Relativbewegung zwischen den Elementen kann auch Auslösen genannt werden.

Um das Auslösen zu überwachen kann beispielsweise ein mechanischer Indikator eingesetzt werden, der in einer Ausführungsform einen Stift umfasst, der beim Bewegen der beiden Elemente gegeneinander verformt oder abgetrennt wird. Vorteilhafter ist eine elektrische Überwachungsvorrichtung, die ein Signal bereitstellt, falls eine Auslösung stattgefunden hat.

Eine der vorliegenden Erfindung zugrunde liegende Aufgabe besteht darin, eine verbesserte Technik zur Überwachung einer Relativbewegung zweier Elemente anzugeben, die beweglich gegeneinander gelagert sind. Die Erfindung löst diese Aufgabe mittels der Gegenstände der unabhängigen Ansprüche. Unteransprüche geben bevorzugte Ausführungsformen wieder.

Eine Vorrichtung zum Überwachen einer Relativbewegung zweier Elemente, die gegeneinander beweglich gelagert sind, umfasst einen Geber und einen Sensor, die aneinander befestigt sind und in einer Feldverbindung miteinander stehen. Der Sensor ist zur kontaktlosen Detektion des Gebers auf der Basis des Feldes eingerichtet. Der Geber ist zur Anbringung an einem der Elemente eingerichtet und der Sensor weist eine Anlagefläche für das andere Element auf, um durch das andere Element vom Geber entfernt zu werden, wenn die Elemente gegeneinander bewegt werden.

Durch die Kopplung des Gebers mit dem Sensor mittels eines Feldes ist es möglich, dass der Sensor kontaktlos auf der Basis des Feldes bestimmt, ob der Geber im Bereich des Feldes ist oder nicht. Dadurch kann zuverlässig bestimmt werden, ob ein Auslösen stattgefunden hat oder nicht. Der Geber und der Sensor können hermetisch voneinander getrennt sein, sodass etwa Feuchtigkeit, Staub, Öl oder eine andere Flüssigkeit nicht in den Sensor oder Geber eindringen kann. Insbesondere kann eine galvanische Trennung zwischen Geber und Sensor realisiert werden. Der Geber kann integriert mit dem Sensor ausgeführt sein, sodass die Handhabung der Vorrichtung erleichtert sein kann. Der Sensor kann insbesondere zum Anschluss an eine elektrische Auswerteeinrichtung eingerichtet sein, indem der Sensor ein Signal bereitstellt, das auf den Auslösezustand (ausgelöst oder nicht ausgelöst) oder ein Auslöseereignis hinweist.

Die Vorrichtung kann insbesondere als Abriss- oder Abschersensor verwendet werden. Eines der Elemente kann gegenüber dem anderen linear verschiebbar oder drehbar gelagert sein. Der Geber kann integriert an einem der Elemente vorgesehen sein. Der Sensor kann dann an dem anderen Element nachgerüstet oder erneuert werden, wenn dies erforderlich ist, insbesondere nach einem Auslösen. Der Geber ist bevorzugt passiv, verfügt also über keine eigene Stromversorgung und kann entsprechend einfach und kostengünstig ausgeführt sein. Ist ein Auslösen erfolgt, so kann ein Ersetzen oder Wiederanbringen des Sensors am Geber einfach vorgenommen werden.

In einer ersten Variante wird eine magnetische Bestimmung durchgeführt. Dazu kann der Geber einen Permanentmagneten zur Bereitstellung eines magnetischen Feldes und der Sensor einen Magnetfeldsensor umfassen. Der Magnetfeldsensor kann aktiv ausgeführt sein, beispielsweise als Hall-Sensor, oder passiv, etwa als Reed-Kontakt. Das magnetische Feld kann einfach und sicher detektiert werden, solange der Sensor am Geber angebracht ist. In einer weiteren Ausführungsform kann ein magnetisches Leitelement vorgesehen sein, um das Magnetfeld im Bereich des Sensors zu formen, sodass es im Bereich des Sensors verstärkt ist, solange keine Auflösung stattgefunden hat.

In einer zweiten Variante wird eine induktive Bestimmung durchgeführt. Dabei kann der Sensor eine Spule zur Bereitstellung eines elektromagnetischen Feldes und der Geber ein Element zur Beeinflussung des elektromagnetischen Feldes umfassen. Insbesondere kann der Geber ein weichmagnetisches Element umfassen, um das elektromagnetische Feld zu formen, sodass die Feldstärke im Bereich des Sensors oder eine Stromaufnahme der Spule in Anwesenheit des Gebers beeinflusst sein können. Üblicherweise wird die Spule mit einem Wechselstrom angesteuert, wobei die Spannungsquelle vom Sensor umfasst oder extern realisiert werden kann. Das elektromagnetische Feld wird bevorzugt auf der Basis eines durch die Spule fließenden Stroms oder einer an der Spule anliegenden Spannung bestimmt. In weiteren Ausführungsformen kann jedoch auch ein dedizierter Sensor zur Bestimmung des elektromagnetischen Feldes vorgesehen sein.

In einer dritten Variante erfolgt eine kapazitive Bestimmung, wobei der Sensor bevorzugt eine Spannungsquelle und der Geber ein dielektrisches Element umfasst. Zwischen dem Sensor und dem Geber besteht dabei ein elektrisches Feld, dessen Feldstärke durch das dielektrische Element beeinflusst und insbesondere verstärkt werden kann. Wird der Geber vom Sensor getrennt, so kann insbesondere eine Änderung der Kapazität zwischen Anschlüssen der Spannungsquelle erfolgen, die mittels einer geeigneten Auswerteeinrichtung bestimmt werden kann. Die Auswerteeinrichtung kann vom Sensor umfasst sein oder extern bereitgestellt werden.

Die genannten Varianten können unter Umständen auch miteinander kombiniert werden. Dabei können auch mehrere Felder den Geber und den Sensor miteinander verbinden, solange der Sensorangeber angebracht ist. Eine Auswertesicherheit kann dadurch verbessert sein.

Es ist weiterhin bevorzugt, dass der Geber zerstörungsfrei vom Sensor trennbar ist. Ein Auswechseln des Gebers an einem der Elemente der Energieverzehreinrichtung kann dadurch entbehrlich sein. Sollte der Sensor hingegen beim Auslösevorgang der Energieverzehreinrichtung Schaden nehmen, so kann er leicht überprüft und gegebenenfalls ausgewechselt werden. In einer Ausführungsform ist ein Verbindungselement zwischen dem Geber und dem Sensor vorgesehen, das in einigen Ausführungsformen durch das Auslösen beschädigt oder zerstört werden kann. Das Verbindungselement kann für einen einfachen Austausch oder eine einfache Reparatur eingerichtet sein.

Zum Anbringen des Sensors am Geber sind ebenfalls unterschiedliche Varianten denkbar. In einer ersten Variante ist der Sensor stoffschlüssig am Geber angebracht. Dazu kann beispielsweise ein Klebstoff oder eine aushärtende Masse zwischen dem Sensor und dem Geber vorgesehen kann, die den Sensor mittels Adhäsivkräften am Geber hält. Die Masse kann beispielsweise eine aushärtende Dicht- oder Klebemasse oder etwa einen Lack nach Art eines Siegellacks umfassen. Die maximal ausübbaren Adhäsionskräfte können darauf abgestimmt sein, welche Belastungen die Verbindung zwischen dem Sensor und dem Geber sicher überstehen muss, um nicht fälschlich, beispielsweise aufgrund von Vibrationen, Temperatureinflüssen oder Alterung, eine Trennung des Sensors vom Geber zu ermöglichen. Eine fehlerhafte Anzeige einer Auslösung der Energieverzehreinrichtung kann dadurch verbessert vermieden werden.

In einer zweiten Variante ist der Sensor kraftschlüssig am Geber angebracht. Dazu kann beispielsweise eine mechanische Schnappverbindung, eine auf Reibungskraft basierende, fehlerbelastete Verbindung oder eine Verbindung mittels Magnetkraft verwendet werden. Die letztgenannte Ausführungsform ist vorteilhaft mit der oben genannten Ausführungsform kombinierbar, in der der Sensor das durch den Geber bereitgestellte magnetische Feld abtastet.

In einer dritten Variante ist der Sensor formschlüssig am Geber angebracht. Diese Variante kann das oben bereits erwähnte Verbindungselement umfassen. Kombinationen der drei Anbringungsarten sind ebenfalls möglich.

In einer weiteren Ausführungsform umfasst die Vorrichtung eine weitere Einrichtung zur Bestimmung eines Abstands zum anderen Element. Diese Einrichtung ist bevorzugt am Sensor angebracht, sodass die weitere Einrichtung zusammen mit dem Sensor so lange am Geber gehalten ist, bis ein Auslösen stattgefunden hat. Dadurch kann eine vorbestimmte Relativbewegung zwischen den Elementen, die nicht zu einer Trennung des Sensors vom Geber führt, bestimmt oder genauer analysiert werden. In diesem Fall tritt das Auslösen erst ein, wenn die Relativbewegung einen vorbestimmten Weg übersteigt.

In weiteren Ausführungsformen können noch weitere Sensoren bzw. Messwertaufnehmer von der Vorrichtung umfasst sein. Diese Aufnehmer sind bevorzugt am erstgenannten Sensor angebracht und können dazu dienen, einen Betriebszustand des Sensors oder eines der Elemente genauer zu bestimmen.

Eine Energieverzehreinrichtung umfasst ein erstes und ein zweites Element, die gegen einen Widerstand gegeneinander beweglich gelagert sind, und eine Vorrichtung nach einem der vorangehenden Ansprüche. Dabei ist bevorzugt der Geber an einem der Elemente und der Sensor derart am anderen Element angebracht, dass die Angriffsfläche des Sensors einer axialen Fläche des anderen Elements zugewandt ist. Die Energieverzehreinrichtung kann eine Kraftübertragung zwischen den beiden Elementen gegen Überlastung schützen und im Fall des Auftretens von Kräften, die das Auslösen bewirken, Energie abbauen. Der Energieabbau kann insbesondere durch Verformen eines der Elemente erfolgen.

Die Energieverzehreinrichtung kann insbesondere ein inneres und ein äußeres Rohrteil umfassen, die koaxial verschiebbar gegeneinander gelagert sind. Die Rohrteile können insbesondere teleskopartig ineinander einschiebbar sein. Dabei kann insbesondere der Geber der Vorrichtung am inneren Rohrteil und ferner der Sensor derart am Geber angebracht sein, dass die Angriffsfläche des Sensors einer axialen Fläche des äußeren Rohrteils zugewandt ist.

In einer bevorzugten Ausführungsform sind die Rohrteile dazu eingerichtet, ohne plastische Verformung axial ineinander eingeschoben zu werden. Die Relativbewegung der Elemente ist hierbei üblicherweise reversibel. Bei diesem Vorgang wird üblicherweise ein Arbeitsfluid in einem Bereich zwischen den Rohrteilen komprimiert oder aus diesem Bereich verdrängt. Das Fluid kann eine Drossel durchlaufen und in einem Arbeitsraum aufgenommen werden. Bei diesem Vorgang kann eine regenerative Energieaufnahme insbesondere durch Erwärmen des Fluids erfolgen. Eine derartige Energieverzehreinrichtung kann etwa als hydrostatischer Puffer, gashydraulischer Puffer oder als in Stoß- und Zugrichtung wirkender TwinStroke Puffer ausgebildet sein.

In einer anderen bevorzugten Ausführungsform sind die Rohrteile dazu eingerichtet, eine destruktive Energieaufnahme durch plastisches Verformen wenigstens eines der Rohrteile zu realisieren. Das innere Rohrteil kann insbesondere radial nach innen oder das äußere Rohrteil radial nach außen verformt werden. Durch die plastische Verformung kann etwa eine Stoßenergie, die auf die Energieverzehreinrichtung wirkt, in eine Verformungsenergie wenigstens eines der Rohrteile umgewandelt werden. Die Verformung ist üblicherweise irreversibel und ein verformtes Rohrteil muss im Allgemeinen ausgetauscht werden.

Eine Kupplungsstange, insbesondere zur Kopplung zweier Schienenfahrzeuge miteinander, kann die oben beschriebene Energieverzehreinrichtung umfassen. Dabei kann wahlweise eine regenerative oder eine destruktive Energieaufnahme erfolgen.

Eine Vorrichtung umfasst einen Geber und einen Sensor, der am Geber angebracht ist. Der Geber ist an einem ersten Element angebracht und der Sensor weist eine Anlagefläche für ein zweites Element auf, das beweglich gegenüber dem ersten Element gelagert ist. Ein Verfahren zum Überwachen einer Relativbewegung zwischen den beiden Elementen umfasst Schritte des kontaktlosen Detektierens des Gebers mittels des Sensors auf der Basis eines Feldes, das zwischen dem Geber und dem Sensor besteht; und des Bestimmens, dass die Elemente gegeneinander bewegt wurden, falls der Geber vom Sensor entfernt wurde.

Die Erfindung wird nun mit Bezug auf die beigefügten Figuren genauer beschieben, in denen:
- Fig. 1: eine Kupplungsstange mit einer Energieverzehrvorrichtung und einer Vorrichtung zur Überwachung, ob die Energieverzehreinrichtung ausgelöst hat;
- Fig. 2: eine Kupplungsstange mit der Vorrichtung von Fig. 1 in einer weiteren Ausführungsform; und
- Fig. 3: ein Ablaufdiagramm zum Überwachen einer Kupplungsstange auf Auslösen mittels einer Vorrichtung nach Fig. 1 oder 2
darstellt.

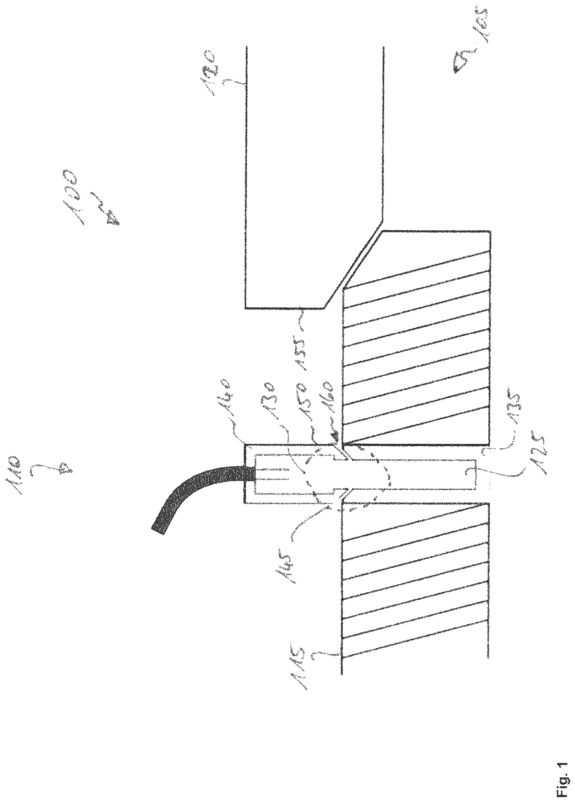

Figur 1 zeigt beispielhaft eine Kupplungsstange 100, die eine Energieverzehreinrichtung 105 und eine Vorrichtung 110 umfasst. Es ist zu beachten, dass die vorgeschlagene Technik zur Überwachung zweier Elemente auf Relativbewegung auch an einer anderen Einrichtung als der Kupplungsstange 100 und, unabhängig davon, auch ohne den Einsatz der Energieverzehreinrichtung 105 verwendet werden kann.

Die Vorrichtung 110 ist dazu eingerichtet ist, ein Auslösen der Energieverzehreinrichtung 105 zu bestimmen. Die Kupplungsstange 100 ist bevorzugt als Teil einer Verbindung zwischen zwei Schienenfahrzeugen einsetzbar. Dazu kann die Kupplungsstange 100 beispielsweise zwischen einem Fahrgestell eines Schienenfahrzeugs und einer Kupplung, etwa einer Scharfenbergkupplung, angeordnet sein.

Die Energieverzehreinrichtung 105 umfasst ein erstes Element 115 und ein zweites Element 120, die auf vorbestimmte Weise beweglich gegeneinander gelagert sind. Die Bewegung erfolgt bevorzugt als Verschiebung entlang nur einer Dimension, die in der Darstellung von Figur 1 horizontal verläuft. In einer bevorzugten Ausführungsform ist die Kupplungsstange 100 bzw. die Energieverzehreinrichtung 105 steif gegenüber einer Zugbelastung und beweglich gegenüber einer Schubbelastung, falls diese einen vorbestimmten Betrag übersteigt. Die Schubbelastung wirkt komprimierend auf die Energieverzehreinrichtung 105, sodass in der Darstellung von Fig. 1 das erste Element 115 nach rechts und das zweite Element 120 nach links gedrückt wird. Das erste Element 115 ist bevorzugt als inneres Rohrteil und das zweite Element 120 als äußeres Rohrteil ausgebildet, sodass das erste Element 115 teleskopartig in das zweite Element 120 eingeschoben werden kann.

Die Elemente 115, 120 sind bevorzugt so bemessen, dass dabei eine plastische Verformung wenigstens eines der Elemente 115, 120 erfolgt, und zwar insbesondere in radialer Richtung. Liegt die Kompressionsbelastung unter dem vorbestimmten Betrag, so wird das Einschieben verhindert. Das Einschieben des ersten Elements 115 in das zweite Element 120 in axialer Richtung über einen vorbestimmten Betrag - der null sein kann - hinaus wird als Auslösen bezeichnet. Aufgrund der mit dem Einschieben verbundenen plastischen Verformung wenigstens eines der Elemente 115, 120 wird die Belastungsfähigkeit der Energieverzehreinrichtung 105 verändert, sodass die Energieverzehreinrichtung 105 möglicherweise ausgetauscht werden muss, um eine vorbestimmte Kraft- oder Energieübertragung weiter gewährleisten zu können. Die Vorrichtung 110 ist dazu eingerichtet, das Auslösen der Energieverzehreinrichtung 105 zu detektieren und ein auf das Auslösen hinweisendes Signal bereitzustellen. Das Signal kann insbesondere an eine Überwachungs- oder Steuereinrichtung weitergeleitet werden und liegt bevorzugt elektrisch vor.

Ist der Einsatz der Vorrichtung 110 ohne die Energieverzehrvorrichtung 105 geplant, so können die Elemente 115, 120 auch anders ausgebildet und insbesondere auch ohne einen substantiellen Abbau von Bewegungsenergie gegeneinander beweglich gelagert sein.

Die Vorrichtung 110 umfasst einen Geber 125, der am ersten Element 115 angebracht ist, und einen Sensor 130, der am Geber 125 angebracht ist. In der dargestellten Ausführungsform ist der Geber 125 in einem Gebergehäuse 135 und der Sensor 130 in einem Sensorgehäuse 140 aufgenommen. Es ist besonders bevorzugt, dass der Sensor 130 gegenüber dem Geber 125 möglichst hermetisch verschlossen ist. Insbesondere ist bevorzugt, dass der Sensor 130 gegenüber dem Geber 125 galvanisch getrennt ist. Weiter ist bevorzugt, dass der Sensor 130 so ausgelegt ist, dass auch nach einem Abtrennen vom Geber 125 keine spannungsführenden Teile außen liegen. Der Geber 125 ist bevorzugt rein passiv aufgebaut. Der Sensor 130 hingegen kann über eine lokale oder kabelgebundene Stromversorgung verfügen.

Zwischen dem Sensor 130 und dem Geber 125 herrscht ein Feld 145, das den Sensor 130 mit dem Geber 125 koppelt. Der Sensor 130 ist dazu eingerichtet, eine Stärke, Richtung oder Art des Feldes 145 zu bestimmen und in Abhängigkeit des Ergebnisses darauf zu schließen, ob sich der Geber 125 am Sensor 130 befindet oder nicht. Der Geber 125 ist dazu eingerichtet, das Feld 145 hervorzurufen oder zu beeinflussen.

In einer ersten Variante ist das Feld 145 ein Magnetfeld, wobei der Geber 125 einen Permanentmagneten umfasst und der Sensor 130 zur Bestimmung eines Magnetfelds eingerichtet ist. Das Sensorgehäuse 140 kann in dieser Variante insbesondere nichtmagnetisch ausgeführt sein. Der Sensor 130 kann passiv aufgebaut sein, indem er ohne weitere Energiezufuhr auf ein Magnetfeld reagiert, oder aktiv, indem er unter Einsatz von Energie das Magnetfeld bestimmt. Ein passiver Sensor 130 umfasst einen Reed-Kontakt, ein aktiver Sensor 130 einen Hall-Sensor. Ist der Sensor 130 zur Bestimmung einer analogen oder mehrwertig digitalen Größe eingerichtet, die auf das Magnetfeld 145 hinweist, so kann ein Vergleich mit einem Schwellenwert mittels einer Vorrichtung im Bereich des Sensors 130 oder an einem entfernten Ort erfolgen.

In einer zweiten Variante umfasst der Sensor 130 eine Spule zur Bereitstellung eines elektromagnetischen Feldes 145. Bevorzugt umfasst der Sensor 130 zusätzlich eine Spannungsquelle zur Ansteuerung der Spule, wobei die Spannungsquelle bevorzugt eine Wechselspannung abgibt. Das Feld 145 ist dabei ein elektromagnetisches Feld oder Wechselfeld. Der Geber 125 umfasst ein Element zur Beeinflussung des elektromagnetischen Feldes 145, insbesondere ein weichmagnetisches Material, beispielsweise nach Art eines Spulenkerns. Dadurch beeinflusst der Geber 125 das elektromagnetische Feld 145, solange der Sensor 130 am Geber 125 angebracht ist. Eine an der Spule anliegende Spannung oder ein durch die Spule fließender Strom können auf die An- oder Abwesenheit des Gebers 125 hinweisen.

In einer dritten Variante ist der Sensor 130 eine elektrische oder/und elektronische Komponente, die in der Lage ist magnetische, kapazitive oder/und elektrische Felder oder optische Strukturen/Muster zu erfassen. Das Feld oder die optische Struktur/Muster wird dabei im Geber 125 erzeugt. Dieses kann z. B. durch einen Magneten, einer kapazitiven Fläche, Spule, optischen Struktur oder Farbmarkierung erfolgen. Entfernen sich Sensor 130 und Geber 125 voneinander, dann verändert sich das vom Sensor erfasste Feld oder die erfasste optische Struktur oder Farbmuster, so das eine Trennung erkannt wird.

Je nach Ausführung kann die Energieversorgung von außen, eine oder mehreren Batterien oder Energy Harvesting erfolgen. Die Daten können über eine drahtgebundene oder drahtlose Verbindung übertragen werden.

Der Geber 125 kann dazu eingerichtet sein, permanent am ersten Element 115 zu verbleiben.

Der Sensor 130 umfasst bevorzugt eine Anlagefläche 150, die einer axialen Fläche 155 des zweiten Elements 120 der Energieverzehreinrichtung 105 zugewandt ist. Beim Auslösen der Energieverzehreinrichtung 105 wird das zweite Element 120 auf den Sensor 130 zu bewegt, bis die axiale Fläche 155 an der Anlagefläche 150 anliegt. Dann wird der Sensor 130 durch eine weitere Bewegung des zweiten Elements 120 gegenüber dem ersten Element 115 nach dem Abscherprinzip vom Geber 125 entfernt. Eine ursprünglich dem Sensor 130 zugewandte Seite des Gebers 125 kann dabei durch das zweite Element 120 abgedeckt werden, sodass eine physische Nähe des Sensors 130 zum Geber 125 zunächst nicht wiederherzustellen ist.

Beim Trennen des Sensors 130 vom Geber 125 kann eine Verbindung 160 gelöst werden. Die Verbindung 160 kann in unterschiedlichen Varianten stoffschlüssig, kraftschlüssig oder formschlüssig sein; eine Kombination ist ebenfalls möglich. Zur Herstellung eines Stoffschlusses kann die Verbindung 160 insbesondere einen Klebstoff oder eine Haftmasse, insbesondere vom aushärtenden Typ, umfassen.

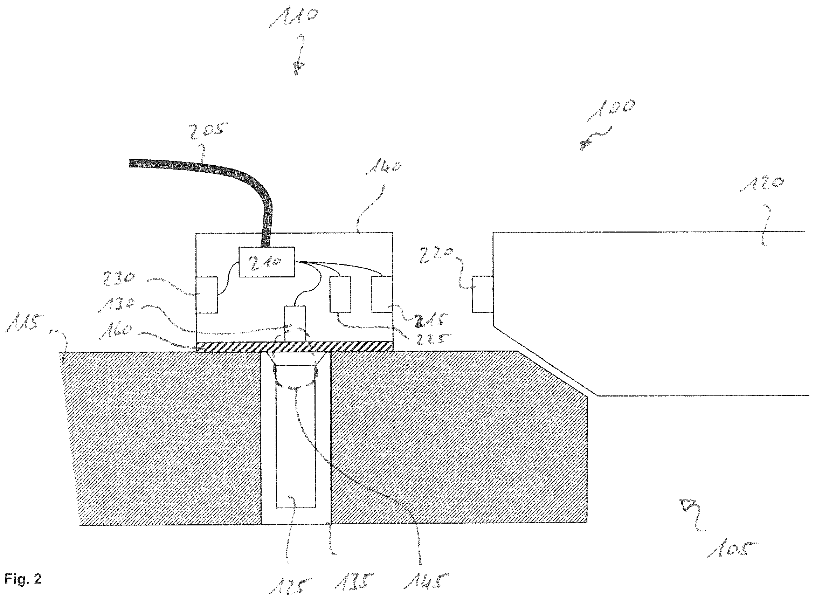

Figur 2 zeigt eine Energieverzehreinrichtung 105 mit der Vorrichtung 110 von Figur 1 in einer weiteren Ausführungsform. Hier ist ein Anschluss 205 zur Bereitstellung des auf den Auslösezustand der Energieverzehreinrichtung 105 hinweisenden Signals nicht unmittelbar mit dem Sensor 130, sondern mit einer Steuereinrichtung 210 verbunden, die ihrerseits mit dem Sensor 130 verbunden ist. Die Steuereinrichtung 210 kann insbesondere eine Gleich- oder Wechselspannungsquelle, einen Stromsensor, einen Spannungssensor oder eines der oben genannten zusätzlichen Elemente zur Ansteuerung des Sensors 130 umfassen.

In der dargestellten Ausführungsform kann die Vorrichtung 110 zusätzlich noch einen oder mehrere weitere Sensoren umfassen, die mechanisch mit dem Sensor 130 gekoppelt sind. Vorliegend sind die Sensoren im Sensorgehäuse 140 aufgenommen. Ein erster Sensor 215 ist zur Bestimmung eines Abstandes zum zweiten Element 120 der Energieverzehreinrichtung 105 entlang der relativen Bewegungsrichtung der Elemente 115 und 120 eingerichtet. Dazu kann an einer dem Sensor 130 zugewandten Fläche des zweiten Elements 120 ein Referenzelement 220 angebracht sein das mittels des ersten Sensors 215 erfasst werden kann, um den Abstand zum Referenzelement 220 zu bestimmen. Das Referenzelement 220 kann beispielsweise einen Permanentmagnet umfassen, wobei die Stärke des Magnetfelds auf die Entfernung des zweiten Elements 120 hinweisen kann. Ein zweiter Sensor 225 kann zur Bestimmung einer Beschleunigung des Sensors 130 eingerichtet sein. Ein dritter Sensor 230 kann vorgesehen sein, um eine Temperatur im Bereich des Sensors 130 zu bestimmen. Die Steuereinrichtung 210 kann dazu eingerichtet sein, den Sensor 130 und die weiteren Sensoren 215, 225 und 230 zyklisch oder permanent abzutasten. Sollte die Energieverzehreinrichtung 105 ausgelöst werden, so kann auf der Basis der abgetasteten Werte der Sensoren 215, 225, 230 eine verbesserte Analyse der Umstände durchgeführt werden, die zum Trennen des Sensors 130 vom Geber 125 geführt haben. Diese Daten können für eine Rekonstruktion eines Ereignisses im Zusammenhang mit dem Auslösen der Energieverzehreinrichtung 105 verwendet werden. Außerdem kann ein Zustand der Energieverzehreinrichtung 105 auf der Basis dieser Informationen verbessert beurteilt werden.

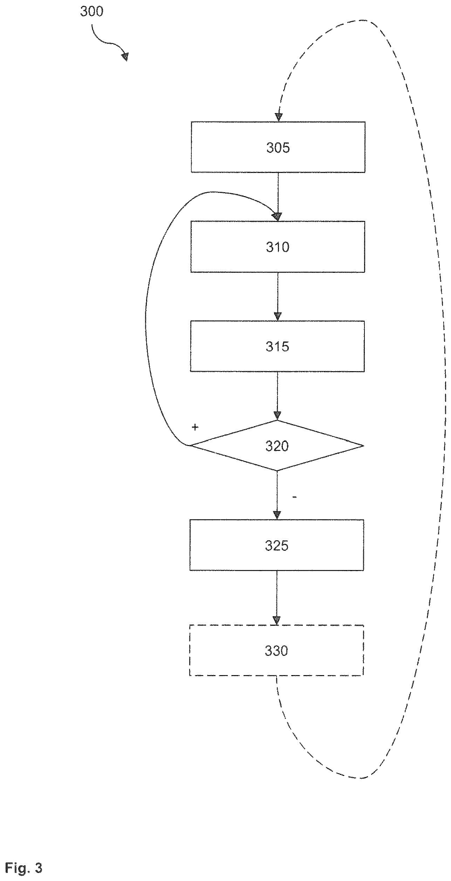

Figur 3 zeigt ein Ablaufdiagramm eines Verfahrens 300 zum Überwachen einer Energieverzehreinrichtung 105 auf Auflösung mittels einer Vorrichtung 110 nach einer der Figuren 1 oder 2.

In einem Schritt 305 wird der Sensor 130 am Geber 125 angebracht. Dabei wird davon ausgegangen, dass der Geber 125 bereits am ersten Element 115 der Energieverzehreinrichtung 105 angebracht ist. Ist zum Zeitpunkt des Einbaus des Gebers 125 am ersten Element 115 der Sensor 130 bereits am Geber 125 befestigt, so kann der Schritt 305 auch ausgelassen werden.

In einem Schritt 310 wird, falls erforderlich, seitens des Sensors 130 das Feld 145 erzeugt, das ihn mit dem Geber 125 koppelt. In manchen Ausführungsformen wird das Feld 145 durch den Geber 125 erzeugt und muss nicht aktiv durch den Sensor 130 generiert oder beeinflusst werden. In einem Schritt 315 wird das Feld 145 zwischen dem Sensor 130 und dem Geber 125 kontaktlos bestimmt. Wird das Feld 145 seitens des Sensors 130 erzeugt, insbesondere mittels einer elektrischen Einrichtung wie einer Spannungsquelle, einer Spule oder Elektroden, so kann ein elektrischer Parameter an dem entsprechenden Mittel abgetastet werden, um das Feld 145 zu bestimmen.

In einem Schritt 320 wird überprüft, ob das abgetastete Feld 145 darauf hinweist, dass sich der Geber 125 in einem Erfassungsbereich des Sensors 130 befindet. Der Erfassungsbereich ist üblicherweise räumlich klein bemessen, sodass eine Entfernung des Sensors 130 vom Geber 125 von wenigen Millimetern oder einigen Zentimetern ausreicht, um den Erfassungsbereich zu verlassen. Befindet sich der Geber 125 im Erfassungsbereich, so fährt das Verfahren 300 bevorzugt mit dem Schritt 310 fort und kann erneut durchlaufen.

Andernfalls wird in einem Schritt 325 ein Abriss des Sensors 130 vom Geber 125 bestimmt, was einem Auslösen der Energieverzehreinrichtung 105 gleichkommt. Ein entsprechendes Signal kann über den Anschluss 205 ausgegeben werden.

In einem optionalen Schritt 330 kann die Energieverzehreinrichtung 105 ausgetauscht werden. Der Sensor 130 kann wiederverwendet oder, falls er beim Auslösevorgang Schaden genommen hat, ausgetauscht werden. Unter Umständen kann das erste Element 115 zusammen mit dem Geber 125 weiter- oder wiederverwendet werden.

Nach dem Instandsetzen der Energieverzehreinrichtung 105 und der Vorrichtung 110 kann das Verfahren 300 mit dem Schritt 305 fortfahren und erneut durchlaufen.

### Bezugszeichen

- 100: Kupplungsstange
- 105: Auslösevorrichtung
- 110: Vorrichtung
- 115: erstes Element (inneres Rohrteil)
- 120: zweites Element (äußeres Rohrteil)
- 125: Geber
- 130: Sensor
- 135: Gebergehäuse
- 140: Sensorgehäuse
- 145: Feld
- 150: Anlagefläche
- 155: axiale Fläche
- 160: Verbindung

- 205: Anschluss
- 210: Steuereinrichtung
- 215: erster Sensor
- 220: Referenzelement
- 225: zweiter Sensor
- 230: dritter Sensor

- 300: Verfahren
- 305: Sensor an Geber anbringen
- 310: evtl. Feld erzeugen
- 315: Feld bestimmen
- 320: Geber in Erfassungsbereich?
- 325: Abriss bestimmen
- 330: Sensor oder Verbindungselement erneuern

## Patentansprüche

1. Vorrichtung (110) zur Überwachung einer Relativbewegung zwischen zwei Elementen (115, 120), die gegeneinander beweglich gelagert sind, und die Vorrichtung (110) folgendes umfasst:
- einen Geber (125) und einen Sensor (130), die aneinander befestigt sind und in einer Feldverbindung (145) miteinander stehen;
- wobei der Sensor (130) zur kontaktlosen Detektion des Gebers (125) auf der Basis des Feldes (145) eingerichtet ist;
- wobei der Geber (125) zur Anbringung an einem der Elemente (115, 120) eingerichtet ist; und
- wobei der Sensor (130) eine Angriffsfläche (150) für das andere Element (115, 120) aufweist,
- um durch das andere Element (115, 120) vom Geber (125) entfernt zu werden, wenn die Elemente (115, 120) gegeneinander bewegt werden.

2. Vorrichtung (110) nach Anspruch 1, wobei der Geber (125) einen Permanentmagneten zur Bereitstellung eines magnetischen Feldes (145) und der Sensor (130) einen Magnetfeldsensor umfasst.

3. Vorrichtung (110) nach Anspruch 1 oder 2, wobei der Sensor (130) eine Spule zur Bereitstellung eines elektromagnetischen Feldes (145) und der Geber (125) ein Element zur Beeinflussung des elektromagnetischen Feldes (145) umfasst.

4. Vorrichtung (110) nach einem der vorangehenden Ansprüche, wobei der Sensor (130) eine Spannungsquelle und der Geber (125) ein dielektrisches Element umfasst.

5. Vorrichtung (110) nach einem der vorangehenden Ansprüche, wobei der Geber (125) zerstörungsfrei vom Sensor (130) trennbar ist.

6. Vorrichtung (110) nach Anspruch 5, wobei der Sensor (130) stoffschlüssig am Geber (125) angebracht ist.

7. Vorrichtung (110) nach Anspruch 5 oder 6, wobei der Sensor (130) kraftschlüssig am Geber (125) angebracht ist.

8. Vorrichtung (110) nach einem der Ansprüche 5 bis 7, wobei der Sensor (130) formschlüssig am Geber (125) angebracht ist.

9. Vorrichtung (110) nach einem der vorangehenden Ansprüche, ferner umfassend eine weitere Einrichtung (215) zur Bestimmung eines Abstands zum anderen Element (115, 120).

10. Energieverzehreinrichtung (105), umfassend ein erstes (115) und ein zweites Element (120), die gegen einen Widerstand gegeneinander beweglich gelagert sind, und eine Vorrichtung (110) nach einem der Ansprüche 1 bis 9, wobei der Geber (125) an einem der Elemente (115, 120) und der Sensor (130) derart am anderen Element (115, 120) angebracht ist, dass die Angriffsfläche (150) des Sensors (130) einer axialen Fläche (155) des anderen Elements (115, 120) zugewandt ist.

11. Kupplungsstange (100), insbesondere zur Kopplung zweier Schienenfahrzeuge, wobei die Kupplungsstange (100) eine Energieverzehreinrichtung (105) nach Anspruch 10 umfasst.

12. Verfahren (300) zum Bestimmen einer Relativbewegung zwischen zwei Elementen (115, 120), die gegeneinander beweglich gelagert sind, mittels einer Vorrichtung (110), wobei die Vorrichtung (110) einen Geber (125), der an einem der Elemente (115, 120) angebracht ist, und einen Sensor (130), der am Geber (125) angebracht ist, umfasst, wobei der Sensor (130) eine Angriffsfläche (150) für das andere Element (115, 120) aufweist und wobei das Verfahren (300) folgende Schritte umfasst:
- kontaktloses Detektieren (320) des Gebers (125) mittels des Sensors (130) auf der Basis eines Feldes (145), das zwischen dem Geber (125) und dem Sensor (130) besteht; und
- Bestimmen (325), dass die Elemente (115, 120) gegeneinander bewegt wurden, falls der Geber (125) vom Sensor (130) entfernt wurde.

## Claims

1. Device (110) for monitoring a relative movement between two elements (115, 120) that are mounted so as to be able to move with respect to one another, and the device (110) comprises the following:
- a transmitter (125) and a sensor (130) that are fastened to one another and are in a field connection (145) with one another;
- wherein the sensor (130) is configured so as to contactlessly detect the transmitter (125) on the basis of the field (145);
- wherein the transmitter (125) is configured for attachment to one of the elements (115, 120); and
- wherein the sensor (130) has a contact surface (150) for the other element (115, 120)
- in order to be removed from the transmitter (125) by the other element (115, 120) when the elements (115, 120) are moved with respect to one another.

2. Device (110) according to Claim 1, wherein the transmitter (125) comprises a permanent magnet for providing a magnetic field (145) and the sensor (130) comprises a magnetic field sensor.

3. Device (110) according to Claim 1 or 2, wherein the sensor (130) comprises a coil for providing an electromagnetic field (145) and the transmitter (125) comprises an element for influencing the electromagnetic field (145).

4. Device (110) according to one of the preceding claims, wherein the sensor (130) comprises a voltage source and the transmitter (125) comprises a dielectric element.

5. Device (110) according to one of the preceding claims, wherein the transmitter (125) is able to be separated from the sensor (130) without destruction.

6. Device (110) according to Claim 5, wherein the sensor (130) is materially attached to the transmitter (125).

7. Device (110) according to Claim 5 or 6, wherein the sensor (130) is frictionally attached to the transmitter (125) .

8. Device (110) according to one of Claims 5 to 7, wherein the sensor (130) is form-fittingly attached to the transmitter (125).

9. Device (110) according to one of the preceding claims, furthermore comprising a further apparatus (215) for determining a distance from the other element (115, 120).

10. Energy absorption apparatus (105), comprising a first element (115) and a second element (120) that are mounted so as to be able to move with respect to one another against a resistance, and a device (110) according to one of Claims 1 to 9, wherein the transmitter (125) is attached to one of the elements (115, 120) and the sensor (130) is attached to the other element (115, 120) such that the contact surface (150) of the sensor (130) faces an axial surface (155) of the other element (115, 120).

11. Coupling rod (100), in particular for coupling two rail vehicles, wherein the coupling rod (100) comprises an energy absorption apparatus (105) according to Claim 10.

12. Method (300) for determining a relative movement between two elements (115, 120) that are mounted so as to be able to move with respect to one another by way of a device (110), wherein the device (110) comprises a transmitter (125) that is attached to one of the elements (115, 120) and a sensor (130) that is attached to the transmitter (125), wherein the sensor (130) has a contact surface (150) for the other element (115, 120) and wherein the method (300) comprises the following steps:
- contactlessly detecting (320) the transmitter (125) by way of the sensor (130) on the basis of a field (145) that exists between the transmitter (125) and the sensor (130); and
- determining (325) that the elements (115, 120) have been moved with respect to one another if the transmitter (125) has been removed from the sensor (130) .

## Revendications

1. Arrangement (110) de surveillance d'un mouvement relatif entre deux éléments (115, 120) qui sont montés mobiles l'un par rapport à l'autre, et l'arrangement (110) comprenant les éléments suivants :
- un transmetteur (125) et un capteur (130), qui sont fixés l'un à l'autre et qui se trouvent dans une liaison de champ (145) l'un avec l'autre ;
- le capteur (130) étant conçu pour une détection sans contact du transmetteur (125) sur la base du champ (145) ;
- le transmetteur (125) étant conçu pour être monté sur l'un des éléments (115, 120) ; et
- le capteur (130) possédant une surface d'application (150) pour l'autre élément (115, 120),
- afin d'être éloigné du transmetteur (125) par l'autre élément (115, 120) lorsque les éléments (115, 120) sont déplacés l'un contre l'autre.

2. Arrangement (110) selon la revendication 1, le transmetteur (125) comportant un aimant permanent destiné à fournir un champ magnétique (145) et le capteur (130) comprenant un capteur de champ magnétique.

3. Arrangement (110) selon la revendication 1 ou 2, le capteur (130) comportant une bobine destinée à fournir un champ électromagnétique (145) et le transmetteur (125) comportant un élément destiné à influencer le champ électromagnétique (145).

4. Arrangement (110) selon l'une des revendications précédentes, le capteur (130) comportant une source de tension et le transmetteur (125) comportant un élément diélectrique.

5. Arrangement (110) selon l'une des revendications précédentes, le transmetteur (125) pouvant être séparé du capteur (130) de manière non destructive.

6. Arrangement (110) selon la revendication 5, le capteur (130) étant monté sur le transmetteur (125) par fusion de matières.

7. Arrangement (110) selon la revendication 5 ou 6, le capteur (130) étant monté sur le transmetteur (125) par assemblage de force.

8. Arrangement (110) selon l'une des revendications 5 à 7, le capteur (130) étant monté sur le transmetteur (125) par complémentarité de formes.

9. Arrangement (110) selon l'une des revendications précédentes, comprenant en outre un dispositif supplémentaire (215) destiné à déterminer un écart par rapport à l'autre élément (115, 120).

10. Dispositif consommateur d'énergie (105), comprenant un premier (115) et un deuxième élément (120) qui sont montés mobiles l'un par rapport à l'autre en s'opposant à une résistance, et un arrangement (110) selon l'une des revendications 1 à 9, le transmetteur (125) étant monté sur l'un des éléments (115, 120) et le capteur (130) sur l'autre élément (115, 120) de telle sorte que la surface d'application (150) du capteur (130) fait face à une surface axiale (155) de l'autre élément (115, 120).

11. Barre d'accouplement (100), notamment destinée à accoupler deux véhicules ferroviaires, la barre d'accouplement (100) comprenant un dispositif consommateur d'énergie (105) selon la revendication 10.

12. Procédé (300) de détermination d'un mouvement relatif entre deux éléments (115, 120) qui sont montés mobiles l'un par rapport à l'autre au moyen d'un arrangement (110), l'arrangement (110) comprenant un transmetteur (125) qui est monté sur l'un des éléments (115, 120) et un capteur (130) qui est monté sur le transmetteur (125), le capteur (130) possédant une surface d'application (150) pour l'autre élément (115, 120) et le procédé (300) comprenant les étapes suivantes :
- détection sans contact (320) du transmetteur (125) au moyen du capteur (130) sur la base d'un champ (145) qui se produit entre le transmetteur (125) et le capteur (130) ; et
- détermination (325) que les éléments (115, 120) ont été déplacés l'un par rapport à l'autre dans le cas où le transmetteur (125) a été retiré du capteur (130).
